**Europäisches Patentamt**

**European Patent Office**

**Office européen des brevets**

(19)

(11) Veröffentlichungsnummer: **0 243 613 B1**

# EUROPÄISCHE PATENTSCHRIFT

(12)

(45) Veröffentlichungstag der Patentschrift:
31.07.91 Patentblatt 91/31

(51) Int. Cl.⁵: **B60G 17/08, F16F 9/46**

(21) Anmeldenummer: 87102886.6

(22) Anmeldetag: 28.02.87

(54) **Vorrichtung zur Dämpfung von Bewegungsabläufen.**

(30) Priorität: 02.04.86 DE 3610937

(43) Veröffentlichungstag der Anmeldung:
04.11.87 Patentblatt 87/45

(45) Bekanntmachung des Hinweises auf die
Patenterteilung:
31.07.91 Patentblatt 91/31

(84) Benannte Vertragsstaaten:
DE ES FR GB IT SE

(56) Entgegenhaltungen:
EP-A- 0 197 316
WO-A-84/01605
FR-A- 2 562 844
GB-A- 1 450 765
GB-A- 2 113 869
US-A- 3 807 678

(56) Entgegenhaltungen:
IEEE TRANSACTIONS ON INDUSTRIAL ELEC-
TRONICS, Band IE-32, Nr. 4, November 1985,
Seiten 355-363, IEEE, New York, US; J.M. HA-
MILTON: "Computer-optimized adaptive suspension technology (COAST)"
VEHICLE SYSTEM DYNAMICS, Band 12, Dezember 1983, Seiten 291-315, Swets & Zeitlinger, Lisse, NL; D. KARNOPP: "Active damping
in road vehicle suspension systems"

(73) Patentinhaber: ROBERT BOSCH GMBH
Postfach 50
W-7000 Stuttgart 1 (DE)

(72) Erfinder: Heess, Gerhard, Dr., Dipl.-Ing.
Stuttgarter Strasse 40
W-7146 Tamm (DE)
Erfinder: Karnopp, Dean, Prof. ing.
1217 Stanford Place
Davis, CA 95616 (US)

**Beschreibung**

Stand der Technik

Die Erfindung betrifft eine Vorrichtung zur Dämpfung von Bewegungsabläufen (semiaktive Dämpfung) nach der Gattung des Hauptanspruchs. Bei einer bekannten Vorrichtung dieser Art (US-PS 3807678) ist bei einem Aufhängesystem zweier Massen, wobei es sich bei der einen Masse um ein oder mehrere Räder eines Fahrzeugs und bei der anderen Masse um den Fahrzeugaufbau handeln kann, zwischen beiden eine passive normale Druckfeder angeordnet, die als passives Trennglied bezeichnet ist und der ein sogenannter aktiver Dämpfer parallelgeschaltet ist. Für aktiv wird dieser Dämpfer, bei welchem in einem Zylinder ein diesen in zwei Arbeitskammern unterteilender Kolben gleitet, deshalb gehalten, weil in die Dämpfungseigenschaften, also in die Voluminaverdrängungen des Druckmittels in den jeweiligen Arbeitshälften des Dämpfers durch Steuerung sozusagen aktiv eingegriffen wird. Zu diesem Zweck sind die beiden Arbeitskammern jeweils zueinander überkreuz und parallel miteinander über entgegengesetzt gerichtete, einen Fluß des Druckmittels ausschließlich in einer Richtung zulassende Ventile geschaltet, wobei dann die von diesen Ventilen jeweils durchgelassene Druckmittelmenge nach "aktiv" durch entsprechende Ansteuerung der Ventile mittels geeignet aufbereiteter Sensorsignale bestimmt wird. Da bei diesem bekannten Federungssystem die Feder selbst völlig passiv, der Dämpfer in seinen Eigenschaften als aktiv aufgefaßt worden ist, wird in dieser Veröffentlichung das Gesamtsystem als halbaktiv oder semiaktiv bezeichnet. Diese Bezeichnung steht aber nicht in einer sinnvollen Beziehung zu den die vorliegende Erfindung betreffenden Dämpfern, die ohne Bezugnahme auf nicht berücksichtigte Federsysteme selbst als sogenannte semiaktive Dämpfer bezeichnet werden können und daher auch bezeichnet sind, aus Gründen, auf die weiter unten noch eingegangen wird.

Eine ähnliche Vorrichtung ist durch die Figur 10 der EP-A-0197316 älter angemeldet.

Es ist ferner bekannt, bei Radaufhängungen in Fahrzeugen sogenannte aktive Dämpfermittel vorzusehen (siehe Aufsatz "Active Damping in Road Vehicle Suspension Systems", veröffentlicht in der Zeitschrift Vehicle System Dynamics, 12 (1983), Seiten 291 bis 316). Auf diese Veröffentlichung wird im übrigen auch deshalb verwiesen, weil grundlegende Überlegungen auch in theoretisch ausführlicher Form, insbesondere für aktive Dämpfungseigenschaften, dort aufgeführt sind.

Der Erfindung liegt die Aufgabe zugrunde, bei einem Dämpfersystem einerseits den Aufbau drastisch zu vereinfachen, andererseits aber dieses Dämpfersystem so auszubilden, daß, obwohl, wie für bestimmte Bedingungen eigentlich erforderlich, aktive Energie nicht zugeführt zu werden braucht, dennoch ein Verhalten erzielt werden kann, welches die Eigenschaften passiver Dämpfungssysteme und gleichzeitig aktiver Dämpfungssysteme im wesentlichen integriert und daher optimale Funktionsfähigkeit unter allen Bedingungen sichergestellt ist, ohne daß an den Frequenzgang der Ventile bzw. deren Reaktivonsbreite zu hohe Ansprüche gestellt werden müssen.

Vorteile der Erfindung

Diese Aufgabe wird gelöst durch die kennzeichnenden Merkmale des Hauptanspruchs, wobei sich der Vorteil ergibt, daß von einer Steuereinheit separat ausgebildete Ventilgruppen auch getrennt mit sogenannten passiven Steuersignalen für die Dämpfung und mit sogenannten aktiven Steuersignalen für die Dämpfung angesteuert werden können, wobei passive und aktive Dämpfungsmittel hintereinandergeschaltet und als Ventile beliebiger Konfiguration ausgebildet sein können. Die sogenannten passiven Steuersignale für die Dämpfung bedeuten hierbei eine langsame adaptive Anpassung einer passiven Dämpfungskomponente zur Beeinflussung des Radverhaltens, abhängig von Straßenbedingungen, während demgegenüber die sogenannten aktiven Steuersignale eine schnellere Einstellung einer aktiven Dämpfungskomponente betreffen, die die Aufbaubewegung zur Komfortoptimierung abhängig von Absolutgeschwindigkeiten und Hub-, Nick- und Rollbewegungen beeinflußt. Dabei kann das gesamte Dämpfersystem so ausgelegt werden, daß die passive Dämpfungssteuerung die Dämpfungswirkung mit Bezug auf Zug oder Druck symmetrisch vergrößert oder verringert, während die aktive Dämpfungssteuerung die Dämpfung als Funktion externer Signale unsymmetrisch macht. Insgesamt ergibt sich eine semiaktive Dämpfungswirkung im System.

Eine von außen erforderliche Energiezufuhr betrifft lediglich die geringen Steuerenergien, die notwendig sind, um beispielsweise bestimmte Ventilpositionen vorzugeben.

Zeichnung

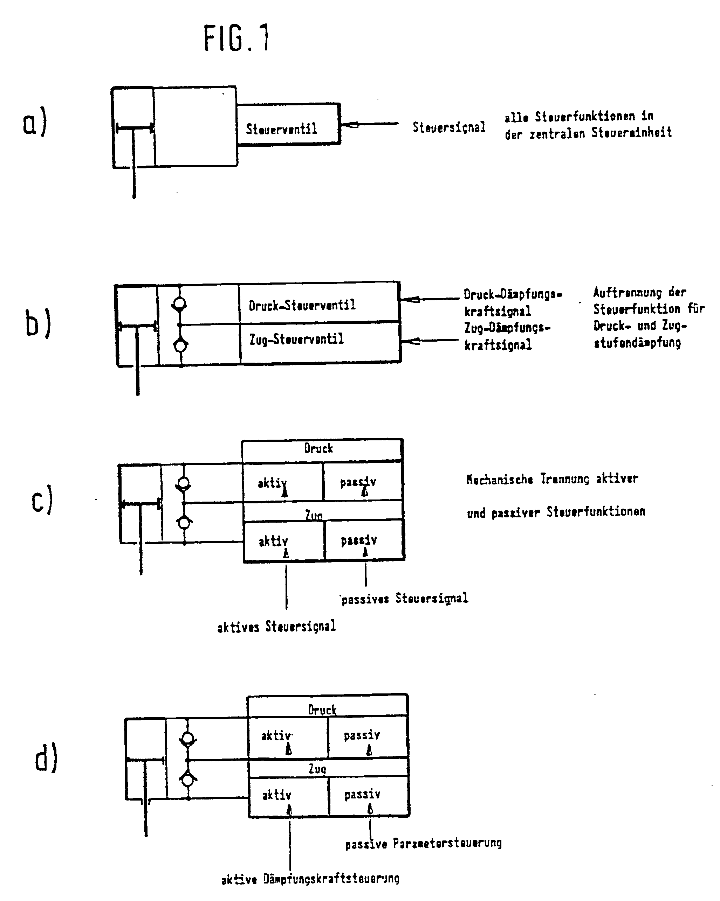

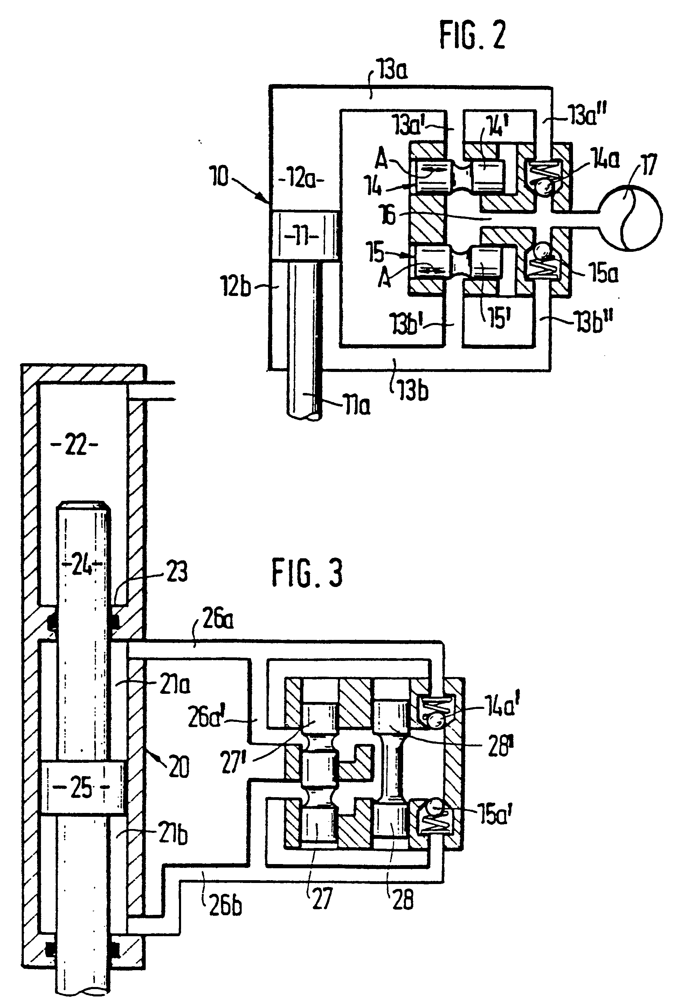

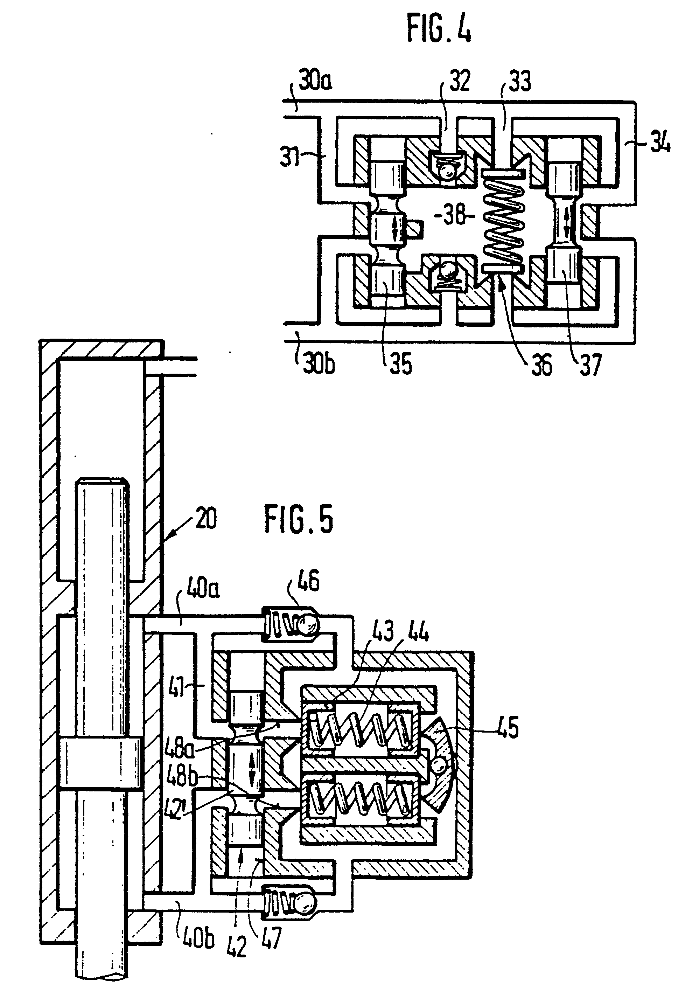

Ein Ausführungsbeispiel der Erfindung ist in der Zeichnung dargestellt und wird in der nachfolgenden Beschreibung näher erläutert. Es zeigen : Figur 1 grundlegende, schematisierte Darstellungen einer halbaktiven Dämpfungssteuerung, wobei bei dem System a) sämtliche Steuerfunktionen in einer Steuereinheit (Dämpfungssteuerungsrechner) zur Ansteuerung des lediglich einen Steuerventils enthalten sind — diese Darstellung ist lediglich zur Klarheit angegeben und nicht Gegenstand der Erfindung ; bei b) ist eine Auftrennung der Steuerungsfunktionen in Druck- und Zugkräfte möglich, wobei passive und aktive Steuerungs-Signalkomponenten ebenfalls in der Steuereinheit (Rechner) enthalten sind ; bei c) ist eine mechanische Trennung aktiver und passiver Steuerfunktionen realisiert und d) zeigt eine passive Parametersteuerung, kombiniert mit einer aktiven Dämpfungskraftsteuerung — die Darstellungen bei b), c) und d) entsprechen in dieser Reihenfolge der detaillierten Darstellung der Figur 2, der Figur 3 und 4 sowie der Figur 5, wobei Figur 2 lediglich als Beispiel zum Verständnis der Erfindung dient, schematisiert die Verwendung von zwei Rückschlagventilen, zugeordnet getrennt ansteuerbaren Ventilen für die Druckstufe und die Zugstufe darstellt, Figur 3 zeigt als Ausführungsbeispiel der Erfindung die mechanische Trennung aktiver und passiver Dämpfungsfunktionen in einer Reihen-Widerstandskonfiguration und Figur 4 ebenfalls die mechanische Trennung aktiver und passiver Dämpfungsfunktionen in einer Parallel-Widerstandskonfiguration, während die Figur 5 eine aktive Dämpfungskraftsteuerung unter Verwendung von Überdruckventilen angibt.

Beschreibung der Ausführungsbeispiele

Die Erfindung basiert auf folgenden Vorüberlegungen, auf die zunächst eingegangen wird und die eine allgemeinere Betrachtung von in Aufhängungssystemen auftretenden Dämpfungskräften umfassen. Zugrundegelegt ist in diesem Zusammenhang ein übliches Zwei-Massen-Modell, bei dem V die sogenannte Körpergeschwindigkeit, hier im speziellen Anwendungsfall beispielsweise also eines Kraftfahrzeugaufbaus, v die Radgeschwindigkeit und $v_0$ die Straßen-Eingangsgeschwindigkeit ist. Als Funktion der relativen Geschwindigkeit $Vrel = v-V$ würde ein passiver Dämpfer eine Dämpfungskraft Fd erzeugen.

Dabei können in ihren Dämpfungseigenschaften elektronisch oder elektrisch gesteuerte Dämpfer in zwei Gruppen oder Unterteilungen aufgeteilt werden, und zwar :

1. in solche einstellbaren Dämpfer, bei denen das Verhältnis zwischen der Dämpfungskraft und der relativen Geschwindigkeit Vrel über dem Dämpfer entweder langsam und kontinuierlich oder durch Umschaltung abrupt geändert werden kann und
2. sogenannte semiaktive Dämpfer, bei denen die Dämpfungskraft Fd schnell als Folge von Steuersignalen moduliert werden kann, die aufgrund weiterer erfaßter Bewegungsvariabler erzeugt werden.

Obwohl semiaktive Dämpfer einige Vorteile aktiver Aufhängungssysteme zu leisten vermögen, wobei lediglich zur Ansteuerung Signalleistungen benötigt werden, sind doch hydraulische Betätigungsschaltglieder (Ventile) mit einer relativ hohen Eckfrequenz im Frequenzgang, also einer entsprechend sehr schnellen Reaktions- und Schaltgeschwindigkeit, erforderlich. Die vorliegende Erfindung betrifft unter anderem Maßnahmen, die die Anforderungen an den Frequenzgang der hydraulischen Schaltelemente begrenzen und erleichtern.

Semiaktive Dämpfer können so ausgelegt sein, daß praktisch jede Art von Verlustenergie verwendbar ist. Erforderlich sind Mittel, um bei Ansteuerung durch ein Signal geringer Leistung die Art und die Mittel zur Erzeugung der erforderlichen Verlustleistung zu beeinflussen. Da sich die vorliegende Erfindung mit hydraulischen Stoßdämpfersystemen, insbesondere für Kraftfahrzeuge beschäftigt, werden im folgenden die hydraulischen Betätigungsmittel als elektrohydraulische Ventile bezeichnet und sind auch so dargestellt. Immer dann, wenn sich über dem so ausgebildeten Dämpfer eine relative Geschwindigkeit ergibt, kann von diesem eine durch die Ansteuerung des elektrohydraulischen Ventils beeinflußte Dämpfungskraft erzeugt werden. Die Richtung dieser Dämpfungskraft (Zug oder Druck) kann, wie es sich versteht, nicht willkürlich gesteuert werden, sondern hängt von der momentanen Richtung der Relativgeschwindigkeit ab. Mindestens zeitweise ist daher ein semiaktiver Dämpfer in der Lage, die Funktion einer gesteuerten Kraftquelle zu erfüllen.

Betrachtet man die einfache schematische Darstellung der Fig. 1 bei a), dann erkennt man, daß ein wesentlicher Gesichtspunkt die erforderliche Bandbreite des Ventils betrifft. Ist nämlich nur ein einziges Ventil vorgesehen, um durch seine Ansteuerung die Höhe der erzeugbaren Dämpfungskraft modulierend zu beeinflussen, dann muß das Ventil seine maximale Öffnungsstellung einnehmen, um dann, wenn die relative Geschwindigkeit ihr Vorzeichen umkehrt, so daß sich nunmehr das Vorzeichen der erzeugten Dämpfungskraft entgegengesetzt zum Vorzeichen der jetzt gewünschten, zur erzeugenden Dämpfungskraft verhält, die erzeugte Dämpfungskraft mindestens nahe an den Wert Null zu bringen. Obwohl es möglich ist, ein solches System zu realisieren, sind die Anforderungen an Art und Ausbildung eines hierzu fähigen Ventils entsprechend hoch. Das Ventil muß nämlich dann, wenn die Relativgeschwindigkeit den Wert Null durchläuft, wenn die nahezu geschlossenen Positionen sehr schnell in einen voll geöffneten Zustand überführt werden können. Da die Relativgeschwindigkeit sowohl von der Radbewegung als auch von der Körperbewegung beeinflußt ist, ergeben sich hier Anforderungen an Ventile bezüglich der zu realisierenden Bandbreiten in der Schaltgeschwindigkeit, die bei 100 Hz liegen.

Die Erfindung löst dieses Problem dadurch, daß für den Ventilbereich eine Aufteilung der an die Ventile zu stellenden funktionellen Erfordernisse und Ansprüche so vorgenommen wird, daß die verwendeten elektrohydraulischen Ventile einen Frequenzgang mit niederen Eckfrequenzen aufweisen können. Es sollte sich daher als möglich erweisen, im Bereich von Kraftfahrzeugen mit Hydraulischen Ventilen zu arbeiten, die zur Beherrschung von Körperbewegungen des Fahrzeugs im 1 bis 2 Hz-Bereich eine Eckfrequenz von nicht mehr als etwa 5 bis 10 Hz benötigen. Radbewegungen im 10 bis 15 Hz-Bereich werden sinnvoller passiv beherrscht als durch elektrohydraulische Ventilgestaltung und -funktion.

Verwendet man, wie die schematisierte Grundkonzeption der Fig. 1b zeigt, zwei hydraulische Ventile in Verbindung mit Rückschlagventilen, um die Zug- und die Druckkräfte getrennt zu steuern, dann ergibt sich beispielsweise die detaillierte Darstellung einer Vorrichtung zur Dämpfung von Bewegungsabläufen, wie in Fig. 2 im einzelnen gezeigt. Ein Kolben-Zylinderaggregat 10 umfaßt einen Kolben 11 mit Kolbenstange 11a sowie eine, lediglich mit Bezug auf die Zeichenebene sogenannte obere Arbeitskammer 12a und eine untere Arbeitskammer 12b. Über Druckleitungen 13a, 13b ist jede Arbeitskammer mit jeweils zugeordneten parallelen Verzweigungsleitungen 13a' und 13a" sowie 13b', 13b" verbunden, die jeweils über ein Drosselventil 14 für die Druckstufe (Druck-Drosselventil) bzw. ein Drosselventil 15 für die Zugstufe (Zug-Drosselventil) mit einer gemeinsamen hydraulischen Leitung 16 in Verbindung stehen, die an einen Ausgleichsdruckspeicher 17 angeschlossen ist. Jeweils parallel zu dem Druck-Drosselventil 14 liegt entsprechend ein Druck-Rückschlagventil 14a und parallel zu dem Zug-Drosselventil 15 ein Zug-Rückschlagventil 15a, die ebenfalls mit dem Ausgleichsdruckspeicher 17 verbunden sind. Diese Rückschlagventile 14a und 15a stellen sicher, daß der Minimaldruck oberhalb bzw. unterhalb des Kolbens 11, also in den Arbeitskammern 12a für die Druckstufe und 12b für die Zugstufe gleich dem Speicherdruck ist. Bewegt sich beispielsweise der Kolben 11 nach oben, was zu einer entsprechenden Druckerhöhung in der Arbeitskammer 12a führt, dann öffnet jedenfalls das Zug-Rückschlagventil 15a, um den Minimaldruck in der Arbeitskammer 12b aufrechtzuerhalten.

Dämpfungskräfte werden hierbei erzeugt von den Druckabfällen über den beiden Drosselventilen 14 und 15, wobei diese in der Darstellung der Fig. 2 und auch in den nachfolgenden Ausführungsformen lediglich aus Gründen des besseren Verständnisses vereinfacht als gesteuerte Schieberventile angegeben sind, wobei die Ventilglieder 14', 15' sich in axialer Richtung längs der Doppelpfeile bei Ansteuerung bewegen können. Hierdurch wird dann ein mehr oder weniger großer Leitungsquerschnitt infolge der mittleren Einschnürung bei jedem Ventilglied je nach Ansteuerung geöffnet oder geschlossen. Es versteht sich, daß hier eine Vielzahl anderer Ventilformen eingesetzt werden können.

Bei der Darstellung der Fig. 2 übernehmen die Rückschlagventile einige der Schaltfunktionen, die bei Fig. 1a sämtlich von dem einen hydraulischen Steuerventil hätten beherrscht werden müssen. Es sei angenommen, daß das übergeordnete Steuersystem (logische, vorzugsweise elektronische Steuereinheit, die aus den verschiedenen Bewegungsabläufen (relativen Geschwindigkeiten) die für die Erzeugung der gewünschten aktiven und passiven Dämpfungsabläufe die erforderlichen Steuersignale für die Drosselventile 14, 15 erzeugt) einen Dämpfungskraftbefehl mit Bezug auf die Druckstufe (Druckrichtung) erzeugt. Ist in diesem Falle dann das Druck-Drosselventil teilweise geschlossen und das Zug-Drosselventil geöffnet, dann wird eine Dämpfungskraft der gewünschten, zutreffenden Richtung so lange erzeugt, wie die relative Geschwindigkeit in der Druckrichtung verläuft. Ändert jedoch die relative Geschwindigkeit ihr Vorzeichen, dann öffnet das Druck-Rückschlagventil 14a und das hydraulische Druckmittel (Öl) könnte frei durch das offene Zug-Drosselventil und das Druck-Drosselventil fließen. Hier ist daher keine schnelle Bewegung dieser Steuerventile erforderlich — betrifft also die von der Steuereinheit erzeugte Steuerkraft (beispielsweise das Magnetteilen von kontinuierlich ansteuerbaren Magnetventilen zugeführte Steuersignal) niederfrequente Körperbewegungen, dann können auch die Drosselventile mit niedriger Frequenz ihre Bewegung durchführen, wobei schnelle Variationen des Vorzeichens der relativen Geschwindigkeit aufgrund einer Radbewegung von den Rückschlagventilen beherrscht und gehandhabt werden. Hierdurch läßt sich einer der Gründe beseitigen, der für die erwähnte hohe Eckfrequenz des nur einen Steuerventils bei der Schemadarstellung der Fig. 1a verantwortlich ist.

Bei der schematischen semiaktiven Dämpfungssteuerung entsprechend Fig. 1b in Verbindung mit Fig. 2 sind getrennte Eingänge für die Steuerung der Zugstufen- und Druckstufen-Dämpfungskräfte vorhanden, die Steuereinheit selbst muß dann aktive und passive Dämpfungskraftkomponenten zu den Zugstufen- oder Druckstufen-Steuerkräften bzw. -signalen kombinieren. Dabei haben Untersuchungen bei linearisierten Fahrzeugmodellen ergeben, daß es für mit Reifen versehenen Kraftfahrzeugen wesentlich ist, sowohl über passive Dämpfungskräfte, die eine Funktion der relativen Geschwindigkeit sind, als auch über aktive bzw. semiaktive Dämpfungskräfte zu verfügen, die eine Funktion absoluter Körperbewegungsvariablen wie absolute Höhenbewegung, absolute Nick- bewegung und Rollbewegung (heave rate, pitch rate, roll rate) sind. Diese theoretischen Ergebnisse weisen den Lösungsweg auch für den nichtlinearen Fall, wobei es sich versteht, daß die passive Dämpfung in Abhängigkeit zum Ausmaß der sich ergebenden Störungen aus Straßenunebenheiten, aerodynamischen Kräften bzw. vom Fahrer selbst verursachten Störgrößen wie Steuermanöver, Brems- oder Beschleunigungsvorgänge einstellbar sein sollte. Dabei kann die passive Dämpfung langsam und abgestimmt auf Änderungen in der Geschwindigkeit des Kraftfahrzeugs oder der Beschaffenheit der Strassenoberfläche variiert oder umgeschaltet werden, um die Handhabung (handling) des Kraftfahrzeugs zu verbessern, oder in Gefahrensituationen eine größere Sicherheit zu erzielen. Dabei läßt sich feststellen, daß die Anforderungen an Steuerventile für passive Dämpfung unterschiedlich zu den Anforderungen sind, die sich für Steuerventile ergeben, die für eine aktive Dämpfung eingesetzt werden. Gemäß der vorliegenden Erfindung ist es möglich, die die aktiven und passiven Kräfte erzeugenden Funktionen mechanisch, wie in Figur 1c schematisch angedeutet, zu trennen, wobei dann ein praktisches Ausführungsbeispiel der detaillierteren Darstellung der Figur 3 entnommen werden kann ; auch hier sind der Einfachheit halber die hydraulischen Drossel- oder Schaltventile als Schieberventile dargestellt.

Das Kolben-Zylinderaggregat der die Bewegungsabläufe dämpfenden Vorrichtung ist mit 20 bezeichnet und umfaßt einen unteren Teilbereich mit einer oberen (Druck)Arbeitskammer 21a und einer unteren (Zug)Arbeitskammer 21b sowie einen sich nach oben in gleicher Form und Durchmesser anschließenden weiteren Raum 212, der als Ausgleichsdruckspeicher ausgebildet ist und in den, eine abgedichtete, verjüngte Führung bei 23 durchsetzend und eine kolbenstangenartige Verlängerung 24 des Kolbens 25 ragt. Die beiden Arbeitskammern 21a, 21b sind auch hier wieder über hydraulische Verbindungsleitungen 26a, 26b mit dem Ventilmechanismus verbunden, der hier jedoch eine mechanische Auftrennung in aktive und passive Dämpfungsfunktionen in Form von jeweils in Reihe geschalteten hydraulischen Widerständen zeigt. Die beiden die Druckstufe und die Zugstufe betreffenden hydraulischen Kreise sind, wie auch bei dem Ausführungsbeispiel der Figur 2, getrennt, wobei jeder Zweig hintereinandergeschaltet den hydraulischen Widerstand der passiven Dämpfungskontrolle und den hydraulischen Widerstand der aktiven Dämpfungssteuerung umfaßt. Es handelt sich hier um eine Reihen-Widerstandslösung (die beiden hydraulischen Widerstände liegen hintereinander), wobei das die passive Dämpfungssteuerung übernehmende Ventil mit 27 und das die aktive Dämpfungssteuerung bewirkende Ventil mit 28 bezeichnet ist. Die hydraulische Zweigleitung 26a' der Druckstufe durchsetzt also zunächst einen passiven Dämpfungssteuerungsbereich und anschließend den aktiven Dämpfungssteuerungsbereich, bis sich diese Leitung im Bereich der hier ebenfalls vorgesehenen beiden Rückschlagventile 14a' und 15a' mit der von der Zugstufe kommenden hydraulischen Druckleitung vereinigt. Allerdings ist ein Druckausgleich im Bereich des eine aktive Dämpfung bewirkenden Steuerventils 28 deshalb möglich, weil dieses die Dämpfung in den beiden Kreisen (Druck, Zug) differenziell verändert — mit anderen Worten, durch die lediglich eine Mitteleinschnürung des Ventilglieds 28' wird je nach Bewegungsrichtung der eine Kreis zunehmend gedrosselt, während der andere zunehmend geöffnet wird.

Demgegenüber ist, jedenfalls bei dem dargestellten Ausführungsbeispiel das Ventilglied 27' des Steuerventils 27 für die passive Dämpfung so ausgebildet, daß diese Dämpfung in beiden Kreisen im gleichen Sinn beeinflußt wird, also entweder erhöht oder verringert — es versteht sich aber, daß die passive Dämpfung nicht notwendigerweise symmetrisch zu sein braucht, wie dies hier beim Steuerventil 27 zum Ausdruck kommt.

Nimmt man an, daß die absolute Körpergeschwindigkeit beispielsweise nach unten gerichtet ist, dann muß das die aktive Dämpfung bewirkende Differentialdrosselventil 28 in seinem Ventilglied 28' so gesteuert werden, daß die Druckdämpfung vergrößert und die Zugdämpfung verringert wird. Dabei ist eine Bewegung dieses Ventils in diesem Fall lediglich mit der natürlichen Körperfrequenz erforderlich. Man kann daher grob vereinfachend feststellen, daß die passive Dämpfungssteuerung die Dämpfung mit Bezug auf die Zug- und Druckwirkung vergrössert oder verringert, während das Steuerventil für die aktive Dämpfung die Dämpfung als Funktion externer Signale unsymmetrisch macht.

Ein weiteres Ausführungsbeispiel der mechanischen Trennung von aktiven und passiven Dämpfungsfunktionen, wie sie grundsätzlich in Fig. 3 soeben besprochen worden ist, ist in Fig. 4 dargestellt und betrifft die Möglichkeit, die hydraulischen Widerstände statt in Reihe, parallel zueinander anzuordnen — bei diesem Ausführungsbeispiel sind ferner Druckentlastungsventile dargestellt, die angeben, daß im praktischen Ausführungsbeispiel noch weitere hydraulische Schaltelemente erforderlich sind.

Bei dem Ausführungsbeispiel der Fig. 4, bei dem auf die Darstellung des Kolben-Zylinderaggregats verzichtet ist, da dieses wie in Fig. 3 ausgebildet sein kann, teilen sich die von den Arbeitskammern des Kolben-Zylinderaggregats kommenden hydraulischen Leitungen 30a, 30b auf in hier jeweils vier parallele Zweigleitungen für die Druckstufe und die Zugstufe. Da Druckseite und Zugseite zueinander symmetrisch sind, wird nur auf die Aufteilung einer der Leitungen genau eingegangen ; eine erste Zweigleitung 31 führt zum auch hier wieder symmetrisch ausgebildeten Steuerventil 35 für die passive Dämpfung ; eine zweite Zweigleitung 32 ist dem auch hier vorhandenen Rückschlagventil zugeordnet, während eine dritte Zweigleitung 33 jeweils zu einem in Gegenrichtung zum jeweiligen, parallel angeordneten Rückschlagventil angeordneten Druckentlastungsventil oder Überdruckventil 36 führt. Schließlich verbindet die vierte Zweigleitung 34 das Differential-Drosselventil 37 mit Druck- bzw. Zugseite des Zylinder-Kolbenaggregats, wobei die anderen Anschlüsse, die auch als Ausgänge der jeweiligen Ventile bezeichnet werden können, in einen gemeinsamen Raum 38 einmünden.

Die bisherigen Ausführungsbeispiele benützen Ventile zur Veränderung des hydraulischen Widerstandes und damit zur Veränderung der Kraft-Geschwindigkeitsbeziehung des Dämpfers. Eine solche Steuerung kann man als Parametersteuerung bezeichnen, denn die Dämpfungskraft wird nicht direkt kontrolliert, sondern durch ihre Beziehung zur relativen Geschwindigkeit.

Die Parametersteuerung scheint für passive Dämpfung logisch zu sein, da eine einstellbare Beziehung zwischen der Dämpfungskraft und der relativen Geschwindigkeit erwünscht ist. Eine passive Dämpfung ist besonders wirkungsvoll bei der Steuerung von Radbewegungen und der Erzeugung der erforderlichen Kontaktkräfte, sie ist allerdings mit Nachteilen bei der Komfortgründe einbeziehenden Körperisolierung behaftet. Andererseits sollte die aktive Dämpfungskraft nicht auf Signale der relativen Geschwindigkeit reagieren, so daß es sinnvoll erscheint, die Wirkung der relativen Geschwindigkeit bei der aktiven Dämpfung so weit wie möglich zu unterdrücken. Erfolgt dies, indem man ein Parameter-Steuerungssystem und eine Kraftrückführung benutzt, dann muß das Ventil allerdings in der Lage sein, bei Frequenzen zu arbeiten und Steuerungsfunktionen durchzuführen, die höher als die Radfrequenz ist, um in der relativen Geschwindigkeit eine Radbewegung kompensieren zu können.

Das in Fig. 5 dargestellte Ausführungsbeispiel betrifft eine Konzeption, die sich bildenden Kräfte oder Drücke direkter zu steuern bzw. zu beherrschen. Die Grundkonzeption entspricht der Schemadarstellung der Fig. 1d und in dem detaillierten Ausführungsbeispiel der Fig. 5 ist der Aufbau des Zylinder-Kolbenaggregats so wie in Fig. 3 getroffen, so daß hierauf nicht weiter eingegangen zu werden braucht.

Grundsätzlich wird so vorgegangen, daß der Druckabfall aufgrund der relativen Geschwindigkeit in dem Drosselventil für die passive Dämpfung sich zu einem Druckabfall über einem Überdruck- oder Entlastungsventil hinzuaddiert. hydraulisch gesehen also eine Reihenschaltung vorliegt, jeweils für die Druckstufenseite und die Zugstufenseite.

Im einzelnen verzweigt sich die druckstufenseitige Druckleitung 40a in eine erste Zweigleitung 41 — da der Aufbau für die Zugstufenseite bei symmetrischer Ausbildung identisch ist, wird auch hier lediglich der Bereich der Druckstufe im einzelnen erläutert — welche zum symmetrischen Drosselventil 42 für die passive Dämpfungskraftsteuerung führt. Diesem Drosselventil ist auf beiden Seiten der Zug- oder Druckstufe jeweils ein Überdruckventil 43 nachgeschaltet, welches federvorgespannt ist, so daß Veränderungen in der Durchflußmenge des Druckmittels nur eine geringe Wirkung auf den Ansprechdruck der Ventile 43 haben. Die Kraft jeder Vorspannungsfeder 44 für jedes Überdruckventil 43 läßt sich einstellen, und zwar mit Hilfe eines in diesem Fall als Dreh-Betätigungsglied 45 ausgebildeten Elements, dessen Position durch einen Stellmechanismus geregelt werden kann, wie in der Zeichnung dargestellt. Hierdurch kann wechselseitig, also asymmetrisch bzw. differentiell der Ansprechdruck oder Abblasedruck der Ventile 43 für die aktive Dämpfungskraftkomponente durch eine entsprechende Ansteuerung des Drehbetätigungsglieds 45 eingestellt werden. Diese Einstellung bzw. das Drehbetätigungsglied selbst können einen vergleichsweise geringen Frequenzgang haben, denn die Überdruckventil- und Federwirkung in diesem Bereich sind geeignet, die Auswirkungen hochfrequenter Veränderungen in der relativen Geschwindigkeit von den Druckkomponenten für die aktive Dämpfung fernzuhalten bzw. aufzufangen. Vorzeichenumkehrungen der relativen Geschwindigkeit werden von den auch hier vorhandenen, in Rückleitungen angeordneten Rückschlagventilen 46 beherrscht und aufgefangen. Da das Drehbetätigungsglied immer nur eine der beiden Ventilfedern, auf die es einwirken kann, zu einem gegebenen Zeitpunkt zusammenpreßt, verbleibt im Fall einer relativen Geschwindigkeitsumkehrung der aktive Teil der Dämpfungskraft bei nahe Null, während die passive Komponente der Dämpfungskraft unverändert verbleibt.

Der Aufbau der in Fig. 5 dargestellten Ventilgruppe ist im einzelnen so getroffen, daß vorzugsweise in einem gemeinsamen Gehäuse zunächst das axial gleitverschieblich gelagerte Ventilglied 42' mit seinen beiden symmetrischen Einschnürungen in einer entsprechenden Führungsbohrung 47, den jeweiligen Steuerbefehlen der Steuereinheit folgend, verschieblich gelagert ist ; die beiden Durchlässe 48a und 48b der Druckstufe und der Zugstufe bilden dann mit ihren Endbereichen gleichzeitig getrennte Ventilsitze für die sich anschließenden Überdruckventile 43, wobei dann beim Abheben der jeweiligen Ventilglieder der Weg zum jeweiligen zugeordneten Rückschlagventil bzw. auch auf die jeweils andere Seite möglich ist.

Durch die Erfindung gelingt es daher, die erforderliche Bandbreite bezüglich des für die Betätigungselemente oder elektrohydraulischen Ventile erforderlichen Frequenzgangs bei semiaktiven Dämpfern entscheidend zu reduzieren, und zwar von beispielsweise 100 Hz auf möglicherweise lediglich 5 Hz, und zwar durch die Verwendung mechanischer Elemente wie Rückschlagventile und Überdruckventile, die einige der erforderlichen Steuerungsfunktionen bei semiaktiver Dämpfung übernehmen.

## Patentansprüche

1. Vorrichtung zur Dämpfung von Bewegungsabläufen von zwei relativ zueinander und in ihren absoluten Positionen mit veränderbaren Geschwindigkeiten sich bewegender Körper oder Massen, insbesondere zur Dämpfung federnder Rad-Aufhängungssysteme bei Fahrzeugen, Straßenfahrzeugen, Bussen, Bahnen u.dgl., mit einem in einem Zylinder verschiebbaren, diesen in zwei Arbeitskammern unterteilenden Kolben, wobei Zylinder und Kolben mit jeweils einem der Körper verbunden sind und für jede Bewegungsrichtung des Kolbens (Zugstufe, Druckstufe) von einer Steuereinheit angesteuerte Ventilmittel vorgesehen sind, wobei der Steuereinheit Sensorsignale über die relative Geschwindigkeit der beiden Körper zueinander, über die absoluten Geschwindigkeiten der Körper unabhängig zueinander, über Beladungszustand, Lastverteilung der Achsen, Fahrgeschwindigkeit, Beschleunigungen in Längs- und Querrichtung, Fahrbahnunebenheiten, Lenkungsausschläge u.dgl. zugeführt sind und parallel zu jedem Ventilmittel ein in Gegenrichtung öffnendes Rückschlagventil geschaltet ist und die zu den Arbeitskammer-Anschlüssen abgewandten Anschlüsse aller Ventile zusammengeführt sind, dadurch gekennzeichnet, daß für die Realisierung von aktiven und passiven Dämpfungskraftfunktionen mechanisch getrennte, hydraulisch miteinander in Wirkverbindung stehende Drosselventile (27, 28) vorgesehen sind, daß die Drosselventile (27, 28) von der Steuereinheit getrennt mit aktiven und passiven Dämpfungssignalen angesteuert werden, wobei die aktiven Dämpfungssignale auf die absolute Geschwindigkeit der Körper oder Massen und die passiven Dämpfungssignale auf die relative Geschwindigkeit der Körper oder Massen bezogen sind und die Drosselventile (27, 28) für die aktive und passive Dämpfungskraftfunktionen so ausgebildet sind, daß für die passive Dämpfung eine für beide Bewegungsrichtungen gleichsinnige (symmetrische) Wirkung und für die aktive Dämpfung eine asymmetrische (differentielle) Wirkung erzielt wird.

2. Vorrichtung nach Anspruch 1, dadurch gekennzeichnet, daß ein beide Bewegungsrichtungen (Zugstufe, Druckstufe) gemeinsam steuerndes Drosselventil (27) für passive Dämpfung vorgesehen ist, dem das die aktive Dämpfung für Zug- und Druckstufe asymmetrisch (differentiell) steuerndes Drosselventil (28) nach Art einer Reihenschaltung hydraulischer Widerstände nachgeschaltet ist, wobei der Ausgang des Differentialdrosselventils (28) für die aktive Dämpfung und die abgewandten Ausgangsanschlüsse der der Reihenschaltung parallel geschalteten Rückschlagventile (14a', 15a') zusammengeführt sind (Fig. 3).

3. Vorrichtung nach Anspruch 1, dadurch gekennzeichnet, daß das die Durchlässe für Zugstufe und Druckstufe asymmetrisch steuernde Drosselventil (37) für die aktive Dämpfung parallel zu dem die Durchlaßbereiche für die Druck- und Zugstufe symmetrisch steuernden Drosselventil (35) für die passive Dämpfung sowie zu den Rückschlagventilen geschaltet ist (Fig. 4).

4. Vorrichtung nach Anspruch 3, dadurch gekennzeichnet, daß zusätzlich für beide Bewegungsrichtungen (Zugstufe, Druckstufe) jeweils ein Überdruckventil (36) ebenfalls parallel zu den Drosselventilen (37, 35) für die Steuerung der aktiven und passiven Dämpfung sowie zu den Rückschlagventilen geschaltet ist, wobei die abgewandten Ausgänge sämtlicher Ventile in einen gemeinsamen Raum (38) münden (Fig. 4).

5. Vorrichtung nach Anspruch 1, dadurch gekennzeichnet, daß die hydrau-lischen Drosselventile für die aktive Dämpfung als Überdruckventile (43) ausgebildet sind, die mit den Ausgangsanschlüssen des oder der Ventile (42) für passive Dämpfung verbunden sind.

6. Vorrichtung nach Anspruch 5, dadurch gekennzeichnet, daß die Überdruckventile (43) federvorgespannt sind und daß ein die jeweiligen Federvorspannungen unsymmetrisch beeinflussendes, von der Steuereinheit angesteuertes Drehbetätigungsglied (45) vorgesehen ist (Fig. 5).

## Claims

1. Device for damping movements of two bodies or masses moving relative to one another and with variable speeds in terms of their absolute positions, especially for damping sprung wheel-suspension systems in vehicles, road vehicles, buses, trains and the like, with a piston displaceable in a cylinder and subdividing this into two working chambers, the cylinder and piston each being connected respectively to one of the bodies, and valve means activated by a control unit being provided for each direction of movement of the piston (tension stage, compression stage), the control unit receiving sensor signals regarding the relative speed of the two bodies to one another, the absolute speeds of the bodies independently of one another, the load state, load distribution of the axles, driving speed, accelerations in the longitudinal and transverse directions, road unevenness, angles of lock and the like, and there being connected in parallel with each valve means a non-return valve opening in the opposite direction and the connections of all the valves facing away from the working-chamber connections being combined, characterised in that mechanically separated throttle valves (27, 28) hydraulically connected operatively to one another are provided for performing active and passive damping-force functions, in that the throttle valves (27, 28) are activated separately from the control unit by means of active and passive damping signals, the active damping signals relating to the absolute speed of the bodies or masses and the passive damping signals relating to the relative speed of the bodies or masses, and the throttle valves (27, 28) for the active and passive damping-force functions being so designed that a (symmetrical) effect equidirectional for the two directions of movement is achieved for the passive damping and an asymmetric (differential) effect is achieved for the active damping.

2. Device according to Claim 1, characterised in that there is for passive damping a throttle valve (27) which jointly controls the two directions of movement (tension stage, compression stage) and which is followed by the throttle valve (28) controlling the active damping for the tension and compression stage asymmetrically (differentially) in the manner of a series connection of hydraulic resistances, the outlet of the differential throttle valve (28) for the active damping and the facing-away outlet connections of the non-return valves (14a', 15a') connected in parallel with the series connection being combined (Figure 3).

3. Device according to Claim 1, characterised in that the throttle valve (37) for the active damping, controlling the passages for the tension stage and compression stage asymmetrically, is connected in parallel with the throttle valve (35) for the passive damping, controlling the passage regions for the compression and tension stage symmetrically, and with the non-return valves (Figure 4).

4. Device according to Claim 3, characterised in that an overpressure valve (36) is likewise connected, additionally for each of the two directions of movement (tension stage, compression stage), in parallel with the throttle valves (37, 35) for controlling the active and passive damping and with the non-return valves, the facing-away outlets of all the valves opening into a common space (38) (Figure 4).

5. Device according to Claim 1, characterised in that the hydraulic throttle valves for active damping are designed as overpressure valves (43) which are connected to the outlet connections of the valve or valves (42) for passive damping.

6. Device according to Claim 5, characterised in that the overpressure valves (43) are spring-prestressed, and in that a rotary actuating member (45) influencing the respective spring prestresses asymmetrically and activated by the control unit is provided (Figure 5).

**Revendications**

1. Dispositif pour amortir les mouvements de deux corps ou masses mobiles l'une par rapport à l'autre et avec des vitesses variables dans leur position absolue, notamment pour amortir des systèmes de suspension de roues de véhicules, de véhicules routiers, d'autobus, de véhicules ferroviaires ou analogues, avec un piston coulissant dans un cylindre et subdivisant celui-ci en deux chambres de travail, le cylindre et le piston étant reliés chacun à un des corps et des soupapes commandées par une unité de commande étant prévues pour chaque direction de mouvement du piston (étage de traction, étage de poussée), l'unité de commande recevant des signaux de capteur concernant la vitesse relative des deux corps, les vitesses absolues des corps, leur état de charge, la répartition de la charge des essieux, la vitesse de déplacement, les accélérations dans la direction longitudinale et la direction transversale, les irrégularités de la route ou les débattements de direction ou analogues, et en parallèle à chaque soupape, il est prévu une soupape anti-retour s'ouvrant dans la direction opposée et à laquelle sont reliés les raccords de toutes les soupapes opposées aux raccords de la chambre de travail, dispositif caractérisé en ce que pour réaliser les fonctions des forces d'amortissement actives et passives, se trouve des soupapes d'étranglement (27, 28) mécaniquement séparées et coopérant l'une avec l'autre de manière hydraulique, les soupapes d'étranglement (27, 28) étant commandées séparément par des signaux d'amortissement actifs et passifs provenant de l'unité de commande, les signaux d'amortissement actifs étant conçus pour la vitesse absolue des corps ou des masses et les signaux d'amortissement passifs correspondant à la vitesse relative des corps ou des masses et les soupapes d'étranglement (27, 28) sont conçues pour les fonctions des forces d'amortissement actives et passives pour que l'amortissement passif a une action (symétrique) de même sens pour les deux directions de mouvement et pour l'amortissement actif, une action asymétrique (différentielle).

2. Dispositif selon la revendication 1, caractérisé par une soupape d'étranglement (27) commandant en commun les deux directions de mouvement (étage de traction, étage de poussée) pour l'amortissement passif, soupape suivie en aval à la manière d'un montage en série de résistances hydrauliques, par la soupape d'étranglement (28) commandant l'amortissement actif, asymétrique (différentiel) pour l'étage de traction et l'étage de poussée, la sortie de la soupape d'étranglement différentielle (28) pour l'amortissement actif et les raccords de sorties opposés des soupapes anti-retour (14a', 15a') sont réunis et branchés en parallèle sur le montage en série (figure 3).

3. Dispositif selon la revendication 1, caractérisé en ce que la soupape d'étranglement (37) qui commande de manière asymétrique les débits de l'étage de traction et de l'étage de poussée pour l'amortissement actif est branchée en parallèle à la soupape d'étranglement (35) commandant de manière symétrique les plages de débits pour l'étage de poussée et l'étage de traction, pour assure l'amortissement passif ainsi qu'en parallèle des clapets anti-retour (figure 4).

4. Dispositif selon la revendication 3, caractérisé en outre par une soupape de surpression (36), pour chacune des deux directions de mouvement (étage de traction, étage de poussée), cette soupape étant également branchée en parallèle aux soupapes d'étranglement (37, 35) pour commander l'amortissement actif et l'amortissement passif ainsi qu'en parallèle des soupapes anti-retour, les sorties opposées de toutes les vannes débouchant dans une chambre commune (38) (figure 4).

5. Dispositif selon la revendication 1, caractérisé en ce que les soupapes d'étranglement hydrauliques de l'amortissement actif sont des soupapes de surpression (43) reliées aux raccords de sortie de la ou des vannes (42) de l'amortissement passif.

6. Dispositif selon la revendication 5, caractérisé en ce que les soupapes de surpression (43) sont précontraintes par ressort et en ce qu'il est prévu un organe de manoeuvre tournant (45) commandé par l'unité de commande et influençant de manière non symétrique les précontraintes par ressort, respectives (figure 5).

# FIG.1

a) | Steuerventil ← Steuersignal | alle Steuerfunktionen in der zentralen Steuereinheit

b) | Druck-Dämpfungs-kraftsignal | Auftrennung der Steuerfunktion für Druck- und Zug-stufendämpfung

Druck-Steuerventil ← Druck-Dämpfungs-kraftsignal

Zug-Steuerventil ← Zug-Dämpfungs-kraftsignal

c) Mechanische Trennung aktiver und passiver Steuerfunktionen

Druck

| aktiv | passiv |

Zug

| aktiv | passiv |

passives Steuersignal

aktives Steuersignal

d)

Druck

| aktiv | passiv |

Zug

| aktiv | passiv |

passive Parametersteuerung

aktive Dämpfungskraftsteuerung

## FIG. 2

## FIG. 3

## FIG. 4

30a 32 33

31 34

-38-

30b 35 36 37

20 ## FIG.5

40a 46

43 44

41

45

48a

48b

42'

40b 42 47